# EUROPEAN PATENT APPLICATION

(11) **EP 0 852 200 A2**
(43) Date of publication of application: **08.07.1998**
(21) Application number: 98100088.8
(22) Date of filing: 07.01.1998
(51) Int. Cl.: B62D 5/07, F01P 7/04

(54) **Hydraulically powered fan and power steering in vehicle**

(30) Priority: 07.01.1997 US 779771
(71) Applicant: ITT AUTOMOTIVE ELECTRICAL SYSTEMS, INC., Auburn Hills, MI 48326-2356 (US)
(72) Inventor: Buschur, Jeffrey B., Bellbrook, Ohio 45305 (US); Machesney, Kerry A., Centerville, Ohio 4548 (US)
(74) Representative: Portwich, Peter

(57) **Abstract**

A cooling system and method for use in an automotive vehicle. A source of hydraulic pressure is used to power both (a) a fan (9) which cools engine coolant and (b) a power steering system (12). The fan (9) and the power steering system (12) are in series-flow arrangement. If pressure to the power steering system (12) exceeds a threshold, flow is diverted around the fan motor (9) to the power steering system (12) utilizing a sensor coupled to a fan speed control.

## Description

### Cross-Reference to Related Application

This application is a continuation-in-part of application Serial No. 08/680,482 filed July 15, 1996, which is a continuation of Serial No. 08/400,927 filed March 9, 1995, now U.S. Patent No. 5,535,845.

### Background of the Invention

### 1. Field of the Invention

The invention concerns a hydraulically powered fan for a radiator in a motor vehicle which shares a hydraulic power source with a power steering system.

### 2. Description of Related Art

In automotive vehicles, a fan commonly removes heat from liquid coolant, by pumping air over a heat exchanger, or radiator, through which the coolant flows. The fan is commonly driven directly by the engine, through a power-transmission belt.

However, one problem with such direct-drive of the fan is that fan speed is linked to engine speed: as engine speed increases, the fan speed also increases. However, as engine speed increases, vehicle speed also generally increases. Increased vehicle speed increases the ram air flow through the radiator, which also cools the coolant, thereby reducing the need for fan cooling.

Thus, at high engine speed, in many cases, the fan runs at a high speed, but is not needed. Some fans are equipped with a clutch, which disengages them from the engine, at high engine speeds, to solve this problem.

However, even when this fan problem is solved, other factors exist which are undesirable. One is that fans are noisy. Each fan blade, as it passes an observer, delivers a small pressure pulse to the observer. As fan speed increases, the number of blade-passes occurring per second also increases, thereby increasing the number of pulses per second. That is, pulse frequency increases as fan speed increases. In addition, the magnitude of the pulses also increases as speed increases. Thus, a high-speed fan acts as a loud, high-frequency, noise source.

Another problem which arises is not so much attributable to the fan, as to automotive design principles. In a transversely mounted engine, the crankshaft is perpendicular to the direction of travel. However, the cooling face of the radiator is preferably perpendicular to the ram air stream, which is parallel to the direction of travel. If the disc representing the fan blades is parallel to the cooling surface of the radiator, then the fan's rotational axis is perpendicular to the crankshaft, causing complexity in transferring power from the crankshaft to the fan.

### Summary of the Invention

An object of the invention is to provide an improved cooling system in an automotive vehicle.

Another object of the invention is to provide a cooling system for an automotive vehicle in which power extracted from the engine, to power a cooling fan, is decreased as engine speed increases.

In one aspect, the invention comprises a motor vehicle, powered by an engine, the improvement consisting of a variable displacement hydraulic pump, powered by the engine, a cooling system, for cooling the engine, and a power steering system, which are in fluidic series connection and receive fluid from the pump.

In another aspect, this invention comprises a motor vehicle, powered by an engine, the improvement consisting of a constant displacement hydraulic pump, powered by the engine, a cooling system, comprising a hydraulic motor, for cooling the engine, and a power steering system, which systems are in fluidic series connection, and receive fluid from the pump; and a system for decreasing a hydraulic input to a fan motor when a system pressure rises.

In yet another aspect of the invention, this invention comprises a system consisting of a constant-displacement pump system, powered by the engine, for producing a constant volumetric rate of pressurized fluid, independent of engine speed, a fan system comprising an input line and an output line, a fan motor, a pressure relief valve, and a speed control valve, all connected in parallel between the input line and the output line, a power steering system in series with the fan system for receiving fluid from the output line, and comprising a steering valve which controls fluid delivery to a steering rack and a relief valve in parallel with the steering valve, a line for recovering fluid from the power steering system and delivering the fluid to a sump which supplies the constant displacement pump system, and a sensor for causing the speed control valve to bypass fluid from the motor when input pressure to the steering valve falls below a threshold.

In one form of the invention, a vehicle displacement pump delivers hydraulic fluid in series to a cooling fan and a power steering pump in an automotive vehicle. If flow to the power steering pump falls short of its needs, a bypass flow to the cooling fan is shunted to the power steering pump.

If a power steering pressure rises above a threshold, then flow to the fan motor is shunted through a control valve, thereby ensuring a predetermined pressure availability to the steering system.

These and other objects and advantages of the invention will be apparent from the following description, the appended claims and the accompanying drawings.

### Brief Description of the Drawings

Figure 1 illustrates one form of the invention;
Figure 2 illustrates another form of the invention; and
Figure 3 illustrates a schedule by which speed of fan 39 in Figure 2 is controlled.

### Detailed Description of Preferred Embodiments

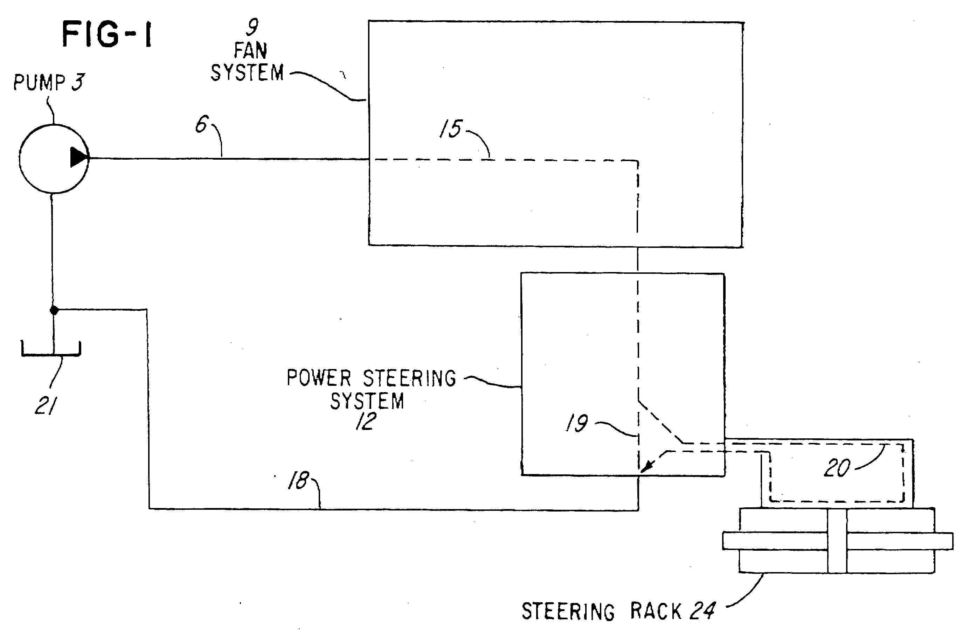

Figure 1 illustrates a simplified schematic view of one form of the invention. A hydraulic pump 3 delivers pressurized fluid along line 6 to a fan system 9. The fan system 9 extracts energy from the pressurized fluid, to drive a fan motor (not shown), which cools engine coolant (not shown).

The fan system 9 is in series-flow arrangement with a power steering system 12. That is, as indicated by arrow 15, all fluid entering the fan system 9 is received by the power steering system 12.

In addition, all fluid received by the power steering system 12 is delivered to line 18, which leads to a reservoir or sump 21, which feeds the pump 3. The power steering system 12 is also in series-flow arrangement with the sump 21. That is, all fluid entering the power steering system 12 from the fan system 9 enters line 18, either (1) directly, as indicated by arrow 19, or (2) indirectly, by first making an excursion through the steering rack 24, as indicated by arrow 20.

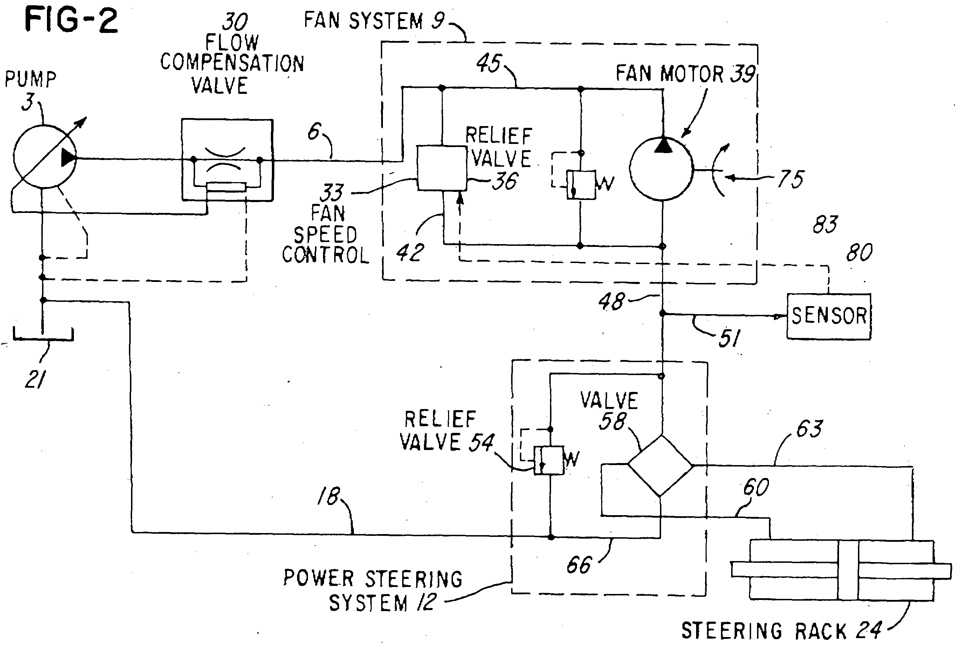

Figure 2 illustrates features of the invention in greater detail. The pump 3 is preferably a hydraulic pump of the variable displacement type, meaning that the flow rate of the pump (e.g., in gallons per minute) can be controlled. This control is exercised by a flow compensation valve 30.

The flow compensation valve 30 is set to maintain a constant volumetric flow through line 6, to the fan system 9. The valve 30 accomplishes this constant flow by adjusting the displacement of pump 3. Such valves are known in the art.

Line 6 feeds three components within the fan system 9, in parallel-flow arrangement, namely, a hydraulic fan speed control 33, a pressure relief valve 36, and a hydraulic fan motor 39, which drives a fan indicated by curved arrow 75. The relief valve 36 is ordinarily closed, unless an over-pressure condition is present. Normally, no over-pressure condition exists.

The fan speed control 33, in effect, is a variable-aperture valve, which allows fluid to bypass the fan motor 39. Operation of the fan system can, conceptually, be divided into three modes (assuming the relief valve 36 to remain closed):

Mode 1. When the fan speed control 33 is fully open, all fluid entering through line 6 is directed along line 42, fully bypassing the fan motor 39. The fan extracts no energy from the fluid entering on line 6. However, in practice, the fan speed control 33, when fully open, does not present a perfect zero impedance to incoming flow. Thus, some flow will be diverted along line 45, to the fan motor 39, which will perhaps extract some energy from this flow, but this flow is considered negligible.

Mode 2. When the fan speed control is fully closed, all fluid entering through line 6 is directed along line 45, and reaches the fan motor 39.

Mode 3. When the fan speed control is open to an intermediate position, the fluid entering through line 6 is divided between lines 42 and 45.

However, in all cases, as explained above, all fluid entering the fan system 9, through line 6, exits the fan system 9, through line 48. All of this fluid enters the power steering system 12. Note that an inlet branch 51 of the power steering system 12 may be coupled to hydraulic pressure sensor 80 which represents a pressure tap discussed later herein. However, no significant flow runs through this branch 51.

The power steering system 12 contains two elements in parallel, namely, a hydraulic pressure relief valve 54 and a hydraulic steering valve 58, which controls steering of the vehicle (not shown).
Ordinarily, the relief valve 54 is closed. Steering valve 58 controls fluid delivery to the two lines 60 and 63 leading to the steering rack 24.

Lines 60 and 63 are in series, with respect to fluid which they deliver to the steering rack 24. That is, assuming the relief valve 54 to be closed, the algebraic sum of the flow through lines 60, 63, and 66 equals the flow entering the power steering system 12 on line 48. With this understanding, the operation of valve 58 can also be divided into three modes.

Mode 1. Valve 58 can deliver some fluid (possibly zero in amount) to line 60, and pass some fluid to line 66. The flow rate in line 60 can be designated F60. The returning flow, in line 63 and designated F63, is the negative of F60. The flow in line 66, F66, equals the incoming flow in line 48, F48, plus (F60 + F63). Stated another way: F66 = F48 + F60 + F63, with F60 being the negative of F63; thus F66 = F48.

Mode 2. This mode is the opposite of mode 1. Valve 58 can deliver some fluid (possibly zero in amount) to line 63 and pass some fluid to line 66. As in mode 1, F60 is the negative of F63. Thus, as in mode 1, F66 = F48 + F60 + F63, with F60 being the negative of F63, F66 = F48 as in mode 1.

Mode 3. In this mode, no fluid is delivered to either line 60 or 63. All incoming fluid from line 48 is delivered to line 66 via relief value 54.

Therefore, all incoming fluid from the fan system 9 is delivered to the power steering system 12 and then returned to the sump 21.

In the series configuration illustrated, both loads, in this case the fan systems 9 and the steering system 12 are in series. The pressure at the pump 3 outline line 6 is the sum of the two loads. For example, if the fan motor 39 maximum capacity produces a pressure of 1600 psi and the steering rack 24 maximum capability is 1450 psi, the total load is their sum, 3050 psi. In the event the pump 3 is not capable of operating at a pressure level of 3050 psi, then pressure sensor 80 limits the flow directed to the fan motor 39 by actuating fan speed control 33. Thus, if the pump 3 maximum pressure capability is 2000 psi, then sensor 80 senses pressure and actuates fan speed control 33 to direct 1450 psi to steering system 12. Thus, as the steering system 12 pressure increases, flow to the fan motor 39 decreases allowing the steering system 12 to reach its full potential of 1450 psi. In this example, the fan system 9 would be limited to 550 psi because the pump 3 is a variable displacement pump which provides a substantially constant flow.

As stated above, the flow compensation valve 30 causes the pump 3 to produce a constant volumetric flow, irrespective of engine speed. Constant-flow pump systems are known in the art. The fan motor 39 is designed to produce maximum cooling when this entire flow is delivered to the fan motor 39, as occurs when the fan speed control 33 is fully closed.

From another point of view, a constant flow is delivered to line 6 and then a selected amount is delivered to the fan motor 39 by fan speed control 33. The selected amount controls the amount of cooling produced by the fan motor 39. Stated another way, the selected amount of hydraulic flow controls the amount, and velocity, of air which is pumped by the fan itself, represented by fan blades 75. Yet the volumetric flow rate of fluid delivered to the power steering system 12 remains constant.

If either, or both, relief valves 36 and 54 are open, the serial flow arrangement of the fan system 9 and the power steering system 12 does not change. That is, if relief valve 36 opens, all flow entering the fan system 9, indicated by arrow 15 in Figure 1, still reaches the power steering system 12, although fan-cooling may be either less or disrupted. In addition, if relief valve 54 in Figure 2 opens, all fluid entering the power steering system 12 on line 48 is still delivered to sump 21 through line 18, although power-steering operation may be disrupted.

As referred to earlier, the hydraulic pressure sensor 80 in Figure 2 can be provided. This sensor 80 produces a hydraulic signal when the pressure in line 48 reaches a predetermined minimum value. This signal is fed to the fan speed control 33 on line 83. This signal causes the fan speed control 33 to open fully, thereby diverting flow from the fan motor 39 and to the power steering system 12.

This operation, in effect, gives priority to the power steering system 12, when pressure in line 48 increases to the maximum value, under the rationale that in this situation power steering is more important than engine cooling. Restated, the combination of sensor 80 and speed control 33 monitors the input pressure, on line 48, to the power steering system 12 and, when the input pressure rises above a threshold, raises that pressure, by diverting flow away from fan motor 39. This diversion eliminates, or reduces, the pressure drop occurring in fan motor 39, and delivers the full pressure in line 6 to the power steering system 12, subject to the drop occurring in speed control 33.

Of course, the sensor 80 need not measure pressure in line 48, even though that pressure is the input pressure to the power steering system 12. Other pressures in the hydraulic circuit of Figure 2 are related to that input pressure and can be used instead.

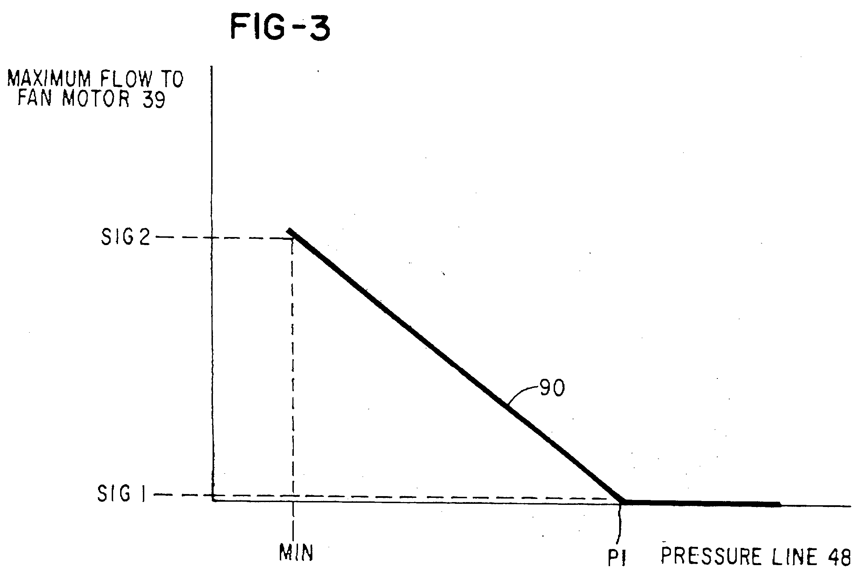

The sensor 80 need not cause the ON/OFF operation just described. Instead, the sensor 80 can produce a scheduled signal, as indicated in Figure 3. When pressure in line 48 in Figure 2 reaches pressure P1 in Figure 3, the sensor 80 in Figure 2 produces an override signal SIG1 in Figure 3, which causes the fan speed control 33 in Figure 2 to fully open, thereby reducing the flow to fan motor 39.

As pressure drops, the signal produced follows line 90 in Figure 3, and, finally, when pressure reaches the minimal acceptable value MIN, the sensor 80 in Figure 2 produces an override signal SIG2 in Figure 3, which causes the fan speed control to close fully. At this time, all flow in line 6 is directed in series to the fan motor 39 and, thereafter, to power steering system 12. Of course, this particular schedule is illustrative only, and the actual scheduling will depend on the particular design implemented.

Thus, sensor 80 provides an override signal in response to pressure on line 48. This, in turn, controls the speed control 33 to direct more or less flow to fan motor 39. Fig. 3 shows a graph of the maximum flow allowed to motor 39 as a function of steering pressure. It should be appreciated that in the embodiment being described, the maximum pump 3 pressure may be in excess of a maximum steering pressure required by pressure relief valve 54. In this case, the difference in these pressures would be available to fan motor 39.

The displacement feature of the combination of pump 3 and compensation valve 30 is significant because the combination holds volumetric flow constant, irrespective of engine speed. If flow were not held constant, then as engine speed increased, flow would increase, creating excess, unneeded flow, thereby wasting energy.

The constant flow rate is designed such that, at engine idle, sufficient energy is produced to enable the power steering system 12 to turn the wheels of a stationary vehicle, standing on dry pavement, when the steering wheel is turned at a nominal speed, such as one revolution per second. (A greater steering wheel speed requires more energy to turn the wheels of the vehicle.) In addition, this constant flow is designed to deliver sufficient energy to the fan motor 39, to provide sufficient cooling on a hot (e.g., 100° F) day to the stationary vehicle.

While the method herein described, and the form of apparatus for carrying this method into effect, constitute preferred embodiments of this invention, it is to be understood that the invention is not limited to this precise method and form of apparatus, and that changes may be made in either without departing from the scope of the invention, which is defined in the appended claims.

## Claims

1. In a motor vehicle, powered by an engine, the improvement comprising:
a variable displacement hydraulic pump which provides a substantially constant flow rate powered by the engine;
a cooling system for cooling the engine, said cooling system comprising a fan motor; and a power steering system, which
i) are in fluidic series connection,
ii) receive fluid from the pump; and
a flow control for bypassing the fan motor in response to steering pressure.

2. The improvement according to claim 1, in which the cooling system further comprises a pressure relief valve in parallel with the hydraulic motor.

3. The improvement according to claim 1, in which the cooling system further comprises a speed control for the motor for selectively allowing fluid to bypass the motor.

4. The improvement according to claim 1, in which the displacement pump provides a substantially constant volumetric flow of fluid, and the cooling system comprises a hydraulic motor, which provides maximum power output at said constant volumetric flow.

5. The improvement according to claim 1, in which the cooling system comprises the following three components in parallel:
i) a hydraulic motor,
ii) a pressure relief valve, and
iii) a bypass valve which controls speed of said hydraulic motor.

6. The improvement according to claim 1, in which the power steering system comprises
i) a steering valve which controls fluid delivery to a fluid rack, and
ii) a pressure relief valve in parallel with the steering valve.

7. The improvement according to claim 1, and further comprising a relief system for raising input pressure to the power steering system when the flow rate falls below a threshold.

8. The improvement according to claim 7, in which said relief system comprises a fan speed control coupled to a sensor.

9. In a motor vehicle, powered by an engine, the improvement comprising:
a variable displacement hydraulic pump, powered by the engine;
a cooling system coupled to said pump and comprising a hydraulic motor, for cooling the engine, and a power steering system, which systems
i) are in fluidic series connection, and
ii) receive fluid from the pump; and
a diverting system bypassing flow from the fan motor to the power steering system when a sensed steering pressure exceeds a threshold.

10. A diverting system comprising:
a variable-displacement pump system powered by the engine for producing a substantially constant volumetric rate of pressurized fluid, independent of engine speed;
a fan system, comprising:
i) an input line (45) and an output line 42;
ii) a fan motor (39), a pressure relief valve (36), and a speed control valve (33), all connected in parallel between the input line (45) and the output line (42);
a power steering system (12), in series with the fan system (9), receiving fluid from a line (48), and comprising:
i) a steering valve (58), which controls fluid delivery to a steering rack (24); and
ii) a relief valve (54) in parallel with the steering valve (58);
a line (18) for recovering fluid from the power steering system (12) and delivering the fluid to a sump (21), which supplies the variable displacement pump system; and
a sensor (80) for causing the speed control valve (42) to bypass fluid from the motor (39) when input pressure to the steering valve (58) exceeds a threshold.

11. A method for prioritizing flow in an automotive hydraulic system comprising a fan system serially coupled to steering system, comprising the steps of:
situating a hydraulic sensor between the fan system and steering system, said sensor being coupled to a control valve;
actuating the control valve in response to the sensor sensing a predetermined control pressure.

12. The method as recited in claim 11 wherein the predetermined minimum pressure is less than a steering pressure required by said steering system.

13. The method as recited in claim 11 wherein said method fu.rther comprises the step of:
coupling said sensor in series between said fan system and steering system.
